# EUROPEAN PATENT APPLICATION

(11) **EP 4 415 066 A1**
(43) Date of publication of application: **14.08.2024**
(21) Application number: 24152254.9
(22) Date of filing: 16.01.2024
(51) Int. Cl.: H01M 4/04, H01M 4/1399, H01M 4/62, H01M 4/88

(54) **METHOD OF MANUFACTURING ELECTRODES AND DRYING APPARATUS**

(30) Priority: 27.01.2023 JP 2023010757
(71) Applicant: Ushio Denki Kabushiki Kaisha, Tokyo 100-8150 (JP)
(72) Inventor: SUZUKI, Shinji, Tokyo, 100-8150 (JP); MATSUMOTO, Shigeki, Tokyo, 100-8150 (JP); NAKAJIMA, Koji, Tokyo, 100-8150 (JP)
(74) Representative: Maiwald GmbH

(57) **Abstract**

Disclosed herein is a method of manufacturing an electrode for a rechargeable battery that is capable of heating and drying a slurry while suppressing the temperature rise of a current collector. The method comprises: a preparation process for preparing a workpiece on which a slurry containing a negative electrode active material is applied to at least one surface of a negative electrode current collector; and a drying process for heating and drying the slurry by irradiating a side of the slurry of the workpiece with light having a wavelength range in which light absorption in the slurry is equal to or greater than 60%.

## Description

### CROSS-REFERENCE TO RELATED APPLICATIONS

This application is related to and claims priority under 35 U.S.C. 119 (a) to Japanese patent application No.2023-01 0757, filed on January 27, 2023, of which disclosure including the specification, drawings and abstract is incorporated herein by reference in its entirety.

### TECHNICAL FIELD

The present invention relates to a method of manufacturing electrodes for rechargeable batteries and a drying apparatus.

### BACKGROUND ART

In general, the electrodes of rechargeable batteries, as typified by lithium-ion batteries, have a structure in which an electrode active material is applied on a top of an electrode current collector. Aluminum or other metal foil is used as a positive electrode current collector, while copper, stainless steel, or other metal foil is used as a negative electrode current collector. Oxides and phosphate compounds of various metals such as lithium, nickel, cobalt, manganese, and iron are used as a positive electrode active material, and carbon-based materials such as graphite and hard carbon, and lithium titanate are used as a negative electrode active material.

The electrodes of rechargeable batteries may be manufactured by applying a slurry of electrode active material powder, a binder, and a conductivity auxiliary agent (e.g., acetylene black or the like) mixed with a solvent onto an electrode current collector, and subsequently drying the slurry using a heater or hot air (see, for example, Patent Literature 1: Publication of Japanese Patent No. 6651240 B, and Patent Literature 2: Publication of Japanese Patent No. 4790092 B).

### LISTING OF REFERENCES

### PATENT LITERATURE

PATENT LITERATURE 1: Publication of Japanese Patent No. 6651240 B
PATENT LITERATURE 2: Publication of Japanese Patent No. 4790092 B

### SUMMARY OF THE INVENTION

### PROBLEMS TO BE SOLVED BY THE INVENTION

In recent years, lithium-ion rechargeable batteries have been rapidly becoming higher current, higher capacity, and faster charging, and the use of silicon powder as the negative electrode active material is being considered in order to achieve higher battery capacity. In this regard, silicon undergoes a large volume expansion when lithium is incorporated therein. Therefore, a mixture of polyimide resins, carboxymethyl cellulose (CMC), and styrene-butadiene rubber (SBR) has attracted attention as a binder for silicon-based electrodes due to its superior stress relaxation capability and strength as compared to polyvinylidene fluoride (PVDF), the conventional binder.

However, those binder resins require relatively high temperatures to dry and polymerize. For example, in some cases polyimide is mixed into a slurry as a polyimide precursor and polymerized at high temperatures during drying, often requiring high temperatures exceeding 200°C and in some cases 400°C, whereas the drying temperature of PVDF is around 100°C.

Conventionally, the drying of a slurry is performed in a drying furnace using a heater or the like. Under such high temperature heating as mentioned above, the increase in interfacial resistance due to oxidation of the current collector surfaces becomes non-negligible. Especially in the case of negative electrodes, copper foil is mostly used as the current collector, and the surface layer of the current collector is prone to oxidation at such high temperatures as described above. At such high temperatures, the increase in interfacial resistance (i.e., contact resistance) due to the formation of copper oxide film is likely to adversely affect the battery performance.

The present invention has been made in order to solve the above mentioned problems, and an object thereof is to provide a method of manufacturing electrodes and a drying apparatus that are capable of heating and drying a slurry while suppressing the temperature rise of a current collector.

### SOLUTION TO PROBLEMS

In order to solve the above mentioned problems, according to one aspect of the present invention, there is provided a method of manufacturing an electrode for a rechargeable battery, comprising: a preparation process for preparing a workpiece on which a slurry containing a negative electrode active material is applied to at least one surface of a negative electrode current collector; and a drying process for heating and drying the slurry by irradiating a side of the slurry of the workpiece with light having a wavelength range in which light absorption in the slurry is equal to or greater than 60%.

In this way, the light having the wavelength range with relatively large light absorption in the slurry is irradiated from the slurry side of the workpiece, so that most of the irradiated light is absorbed by the slurry, making it difficult for the irradiated light to reach the current collector. Thus, it makes it possible to heat and dry the slurry in a substantially selective manner while suppressing the temperature rise of the current collector. As a result, it makes it possible to suppress the progress of oxidation on the surface of the current collector, which is mainly composed of metal foil so as to prevent the battery performance from deteriorating.

In the above method of manufacturing an electrode, the drying process may irradiate the side of the slurry of the workpiece with light having a wavelength range in which the light absorption in the slurry is equal to or greater than 60% and light reflectance on a surface of the negative electrode current collector is equal to or greater than 30%.

In this case, light transmitted through the slurry is reflected on the surface of the current collector toward the slurry, and the current collector itself absorbs less light. Therefore, it makes it possible to effectively suppress the temperature rise of the current collector.

Furthermore, in the above method of manufacturing an electrode, the slurry may be made of thermally cross-linked material.

In this case, it makes it possible to heat up the slurry by light irradiation so as to promote the cross-linking reaction by the heat.

Yet furthermore, in the above method of manufacturing an electrode, the slurry may contain polyimide or polyimide precursor, and the drying process may irradiate the side of the slurry of the workpiece with light having a peak wavelength between 320 nm and 450 nm.

In this case, it makes it possible to irradiate the workpiece with light having a wavelength equal to or less than 450 nm, where the absorption rate of polyimide or polyimide precursor is relatively high, while suppressing the irradiation with light having the wavelength of UV-B or shorter, which causes deterioration of the electrodes due to decomposition of the polyimide (i.e., lower molecular weight). Since polyimide is a resin that requires processing at particularly high temperatures, it makes it possible to obtain the effect of selective heating of the slurry significantly.

Yet furthermore, in the above method of manufacturing an electrode, the slurry may contain carboxymethyl cellulose and styrene-butadiene rubber, and the drying process may irradiate the side of the slurry of the workpiece with light having a peak wavelength between 320 nm and 450 nm.

In this case, it makes it possible to irradiate the workpiece with light having a wavelength equal to or less than 450 nm, at which carboxymethyl cellulose (CMC) begins to absorb light, while suppressing the irradiation with light having the wavelength of UV-B or shorter, which causes decomposition and deterioration of styrene-butadiene rubber (SBR).

Yet furthermore, in the above method of manufacturing an electrode, the drying process may irradiate the side of the slurry of the workpiece with light having a peak wavelength between 365 nm and 405 nm.

In this case, it makes it possible to convert light to heat more efficiently by irradiating with light having shorter wavelengths with relatively high light absorption rates, while minimizing deterioration caused by irradiating with UV light having shorter wavelengths.

Yet furthermore, in the above method of manufacturing an electrode, the negative electrode current collector may be made of copper; and the drying process may irradiate the side of the slurry of the workpiece with light with a wavelength equal to or greater than 380 nm.

At wavelengths equal to or greater than 380 nm, the reflectance of the copper foil is equal to or greater than 40%. Therefore, in this case, light transmitted through the slurry is appropriately reflected on the surface of the current collector toward the slurry, thus it makes it possible to suppress the current collector from being heated more efficiently.

Yet furthermore, in the above method of manufacturing an electrode, the negative electrode current collector may be made of stainless steel.

Since stainless steel has a lower thermal conductivity, the heat from the slurry is hardly transferred to the current collector made of stainless steel. Therefore, in this case, it makes it possible to appropriately suppress the temperature rise due to heat conducted from the slurry, thus, it makes it possible to obtain the effect of selective heating of the slurry significantly.

Yet furthermore, in the above method of manufacturing an electrode, the drying process may irradiate the side of the slurry of the workpiece with the light while cooling an opposite side of the workpiece from the slurry.

In this case, it makes it possible to heat and dry the slurry while appropriately suppressing the temperature rise of the current collector.

According to another aspect of the present invention, there is provided a drying apparatus for drying a workpiece on which a slurry containing an electrode active material is applied to at least one surface of an electrode current collector, comprising: a light source unit; a cooling mechanism configured to cool the workpiece; a conveyance mechanism configured to convey the workpiece; and a controller unit, the light source unit including an LED element configured to emit light having a peak wavelength between 320 nm and 450 nm, and being arranged at a position to irradiate a side of the slurry of the workpiece with the light, the cooling mechanism cooling the workpiece from a side opposite to a surface of the workpiece onto which the light is irradiated; and the controller unit controlling at least one of the light source unit and the conveyance mechanism to scan or sequentially move the workpiece and the light source unit relative to each other, and controlling the light source unit to irradiate the side of the slurry of the workpiece with the light to heat and dry the slurry.

In this way, the slurry is heated and dried by irradiating the workpiece with light having a peak wavelength between 320 nm and 450 nm from the slurry side. By irradiating the workpiece with light having a shorter wavelength equal to or less than 450 nm, most of the irradiated light is absorbed by the slurry, making it difficult for the light to reach the current collector. Thus, it makes it possible to heat and dry the slurry in a substantially selective manner while suppressing the temperature rise of the current collector. As a result, it makes it possible to suppress the progress of oxidation on the surface of the current collector, which is mainly composed of metal foil, and to prevent the battery property from deteriorating. In addition, by suppressing the irradiation with light having a wavelength equal to or less than 320 nm, it makes it possible to prevent the binder from deteriorating due to light irradiation.

Furthermore, in the above drying apparatus, the cooling mechanism may cool a region on the workpiece that is irradiated with the light from the side opposite to the surface of the workpiece onto which the light is irradiated during the light source unit irradiating the workpiece with the light.

In this case, it makes it possible to heat and dry the slurry while appropriately suppressing the temperature rise of the current collector.

Yet furthermore, in the above drying apparatus, the controller unit may control at least one of the light source unit, the cooling mechanism, and the conveyance mechanism to control temperature of the slurry within a predetermined temperature range.

In this case, it makes it possible to dry the slurry more appropriately.

Yet furthermore, in the above drying apparatus, the workpiece may have an elongated shape, and the conveyance mechanism may convey the elongated workpiece wound in the form of a reel.

In this case, it makes it possible to continuously dry the slurry.

Yet furthermore, in the above drying apparatus, the drying apparatus may be equipped with a plurality of light source units, each of the LED elements may be arranged to form a linear irradiation region in a width direction of the elongated workpiece, the plurality of light source units may be arranged such that respective linear irradiation regions of the plurality of light source units partially overlap in a conveyance direction of the workpiece, and the controller unit may control temperature of the slurry in the irradiation regions within a predetermined temperature range.

In this case, using multiple light sources, it makes it possible to dry the slurry more efficiently.

### ADVANTAGEIOUS EFFECT OF THE INVENTION

According to the present invention, it makes it possible to heat and dry a slurry while suppressing the temperature rise of a current collector.

The above mentioned and other not explicitly mentioned objects, aspects and advantages of the present invention will become apparent to those skilled in the art from the following embodiments (detailed description) of the invention by referring to the accompanying drawings and the appended claims.

### BRIEF DESCRIPTION OF DRAWINGS

FIG. 1 is a schematic diagram exemplarily illustrating a basic structure of a rechargeable battery.
FIG. 2 is a cross-sectional view exemplarily illustrating the basic structure of the rechargeable battery.
FIG. 3 is a schematic diagram exemplarily illustrating manufacturing processes of a rechargeable battery.
FIG. 4 is a schematic diagram exemplarily illustrating detailed processes for forming electrodes of the rechargeable battery.
FIG. 5 is a schematic diagram schematically illustrating an exemplary configuration of a drying apparatus according to the present embodiment.
FIG. 6 is a schematic diagram exemplarily illustrating a light irradiation region.
FIG. 7 is a chart illustrating the transmittance of polyimide.
FIG. 8 is a chart illustrating the transmittance of CMC.
FIG. 9 is a chart illustrating the reflectance of copper.
FIG. 10 is a chart illustrating the reflectance of iron (i.e., stainless steel).

### DESCRIPTION OF EMBODIMENTS

Hereinafter, non-limiting embodiments of the present invention will be described in detail with reference to the accompanying drawings. Among the constituent elements disclosed herein, those having the same function are denoted by the same reference numerals, and a description thereof is omitted. It should be noted that the embodiments disclosed herein are illustrative examples as means for implementing the present invention, and should be appropriately modified or changed depending on a configuration and various conditions of an apparatus to which the present invention is applied, and the present invention is not limited to the following embodiments. Furthermore, it should be noted that all of the combinations of features described in the following embodiments are not necessarily essential to the solution of the present invention.

The present embodiment will describe a method of manufacturing electrodes for rechargeable batteries and a drying apparatus to be used in the processes of forming electrodes for rechargeable batteries. According to the present embodiment, electrodes are fabricated by irradiating a workpiece on which a slurry containing an electrode active material is applied to at least one surface of an electrode current collector, and subsequently heating and drying the slurry by light irradiation.

In the following description, although electrode formation for lithium-ion batteries will be exemplarily described, the method of manufacturing electrodes and the drying apparatus according to the present embodiment may be applied to rechargeable batteries other than lithium-ion batteries.

First, an overview of lithium-ion batteries will be described below.

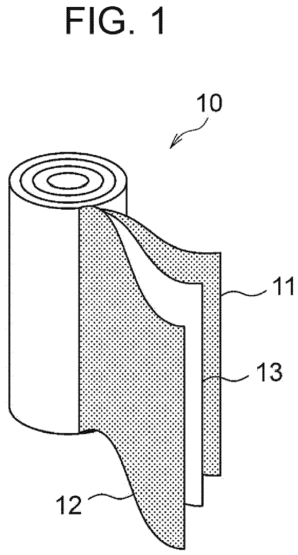

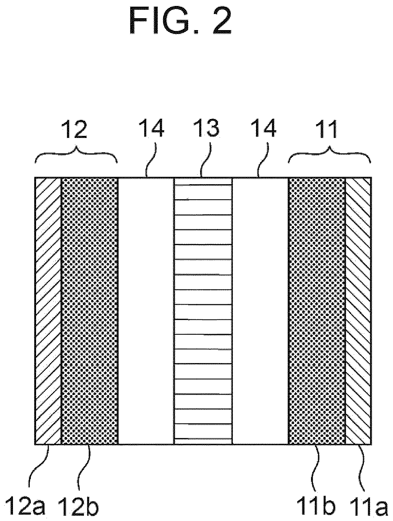

FIG. 1 FIG. 1 is a schematic diagram exemplarily illustrating a basic structure of a lithium-ion battery 10, and FIG. 2 is a cross-sectional view exemplarily illustrating the basic structure the lithium-ion battery.

As shown in FIG. 1, the lithium-ion battery 10 has a structure in which a constituent structure, which includes a positive electrode 11, a negative electrode 12, and a separator 13 disposed between the positive electrode 11 and the negative electrode 12, is wound around and accommodated in a battery casing. The battery casing is also filled with an electrolytic solution 14 (as shown in FIG. 2).

It should be noted that, although a certain case of a cylindrical battery casing will be described here, alternatively, the battery casing may be square, laminated, or other shapes.

As shown in FIG. 2, the positive electrode 11 includes a positive electrode current collector 11a and a positive electrode active material layer 11b coated on the positive electrode current collector 11a. The positive electrode active material layer 11b includes a positive electrode active material, a conductive auxiliary agent, and a binder. Similarly, the negative electrode 12 includes a negative electrode current collector 12a and a negative electrode active material layer 12b coated on the negative electrode current collector 12a. The negative electrode active material layer 12b includes a positive electrode active material, a conductive auxiliary agent, and a binder.

The lithium-ion battery 10 is produced by welding respective ends of the electrode leads (not shown) to predetermined locations on the positive electrode current collector 11a and the negative electrode current collector 12a, respectively, accommodating the positive electrode current collector 11a and the negative electrode current collector 12a in the battery casing, introducing the other ends of the electrode leads out of the battery casing, pouring the electrolytic solution 14 in the battery casing, and finally sealing the battery casing.

For example, aluminum (Al) may be used as the positive electrode current collector 11a. For example, copper (Cu) or stainless steel (SUS) may be used as the negative electrode current collector 12a. It should be noted that materials for the positive electrode current collector 11a and the negative electrode current collector 12a are not limited the above as long as they are highly conductive, resistant to corrosion, and hard to form an alloy with lithium.

Furthermore, for example, lithium cobalt oxide (LiCoO₂) may be used as the positive electrode active material. For example, silicon may be used as the negative electrode active material. It should be noted that the lithium-ion battery 10 charges and discharges by lithium ions moving in the electrolytic solution 14 between the positive electrode 11 and the negative electrode 12. Therefore, the positive electrode active material and the negative electrode active material are not limited to the above as long as they have capability to absorb and release lithium ions.

The conductive auxiliary agent is a material used to obtain high conductivity and may be, for example, carbon powder such as acetylene black, carbon black, graphite, and the like. One or a combination of two or more conductive auxiliary agents may be used.

The binder is a binding material used to bind the active material powder and adhere the bound active material to the current collector. For example, a polyimide binder containing polyimide (e.g., aromatic polyimide) or a polyimide precursor may be used as the binder. It should be noted that a mixture of carboxymethyl cellulose (CMC) and styrene-butadiene rubber (SBR) may also be used as the binder. It is preferable that the binder is high in intensity and has a high modulus of elasticity.

The above polyimide binders and CMC + SBR binders have superior stress relaxation ability and strength as compared to polyvinylidene fluoride (PVDF), which has been conventionally used as the binder. Therefore, even when the active material undergoes severe repetitive expansion and contraction due to attaching and detaching lithium during the processes of repetitive charging and discharging of the rechargeable battery, those binders are able to absorb and relax the stress of the active material. As a result, it makes it possible to suppress deterioration of electrodes such as degradation of the electrical performance and the contact resistance due to exfoliation of the active material layer from the current collector and cracks in the active material layer, thereby extending the battery life.

The separator 13 is not limited to a particular material as long as the separator 13 is able to insulate the positive electrode 11 from the negative electrode 12 and allow lithium ions to move therebetween.

For example, an organic electrolytic solution consisting of an organic solvent and electrolyte salt (e.g., lithium salt) may be used as the electrolytic solution 14. It should be noted that an electrolyte in a semi-solid state or an all-solid state may be used instead of the electrolytic solution 14.

Hereinafter, the method of manufacturing the lithium-ion battery 10 will be described in detail.

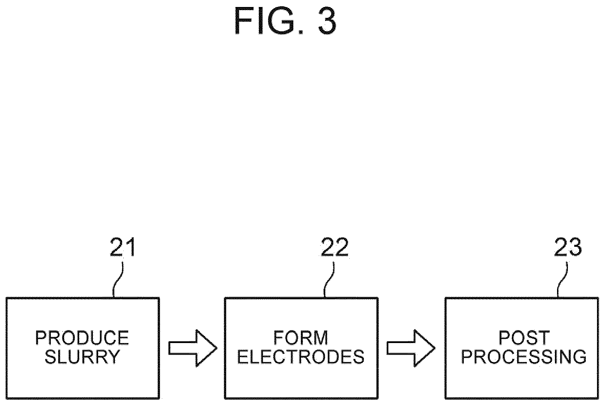

FIG. 3 is a schematic diagram illustrating exemplary manufacturing processes of the lithium-ion battery 10.

As shown in FIG. 3, lithium-ion battery 10 is manufactured mainly through a slurry production process 21, an electrode formation process 22, and a post processing process 23.

In the slurry production process 21, the active material powder, the binder, and the conductive auxiliary agent are mixed with a solvent to produce a slurry. In the slurry production process 21, a positive electrode slurry and a negative electrode slurry are produced, respectively.

Subsequently, in the electrode formation process 22, the slurry produced in the slurry production process 21 is coated on the current collector, and the slurry is dried to form an electrode. In this electrode formation process 22, the positive electrode 11 and the negative electrode 12 are formed, respectively.

Yet subsequently, in the post processing process 23, the lithium-ion battery 10 is assembled and the assembled lithium-ion battery 10 undergoes an inspection. More particularly, in this post processing process 23, the positive electrode 11 and the negative electrode 12 formed in the electrode forming process 22 are wound together, insulated by the separator 13, using a winder, for example, and then housed in the battery casing and filled with the electrolytic solution 14. Subsequently, after a finishing process such as venting of gases generated inside the battery, the lithium-ion battery 10 is sealed and then undergoes various inspections.

Hereinafter, the electrode formation process 22 will be described in more detail.

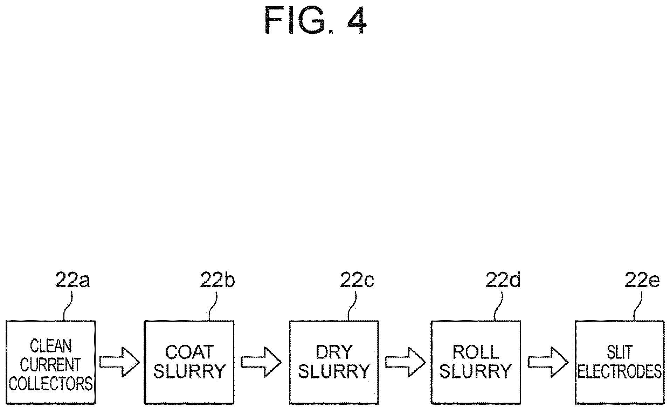

As shown in FIG. 4, the electrode forming process 22 includes a current collector cleaning process 22a, a slurry coating process 22b, a slurry drying process 22c, a rolling process 22d, and a slitting process 22e. Hereinafter, a process of forming the negative electrode will be describe below as an example of the electrode forming process 22 according to the present embodiment.

In the current collector cleaning process 22a, the surface of the negative electrode current collector 12a is cleaned. Although the cleaning method is not particularly limited, for example, a cleaning method using light irradiation or a cleaning method using a cleaning solution may be employed.

In the slurry coating process 22b, the slurry is applied to the negative electrode current collector 12a after being cleaned.

In the slurry drying process 22c, a drying apparatus is used to dry the slurry applied to the negative electrode current collector 12a. According to the present embodiment, the slurry may be heated and dried by light irradiation. According to the present embodiment, the slurry is made of thermally crosslinked material, and the crosslinking reaction is progressed by heating through the light irradiation. The detail of the drying apparatus used in the slurry drying process 22c will be described later.

In the rolling process 22d, a roll press machine is used to adjust the thickness of the dried slurry.

In the slitting process 22e, a slitter is used to cut the electrode to fit inside the battery casing.

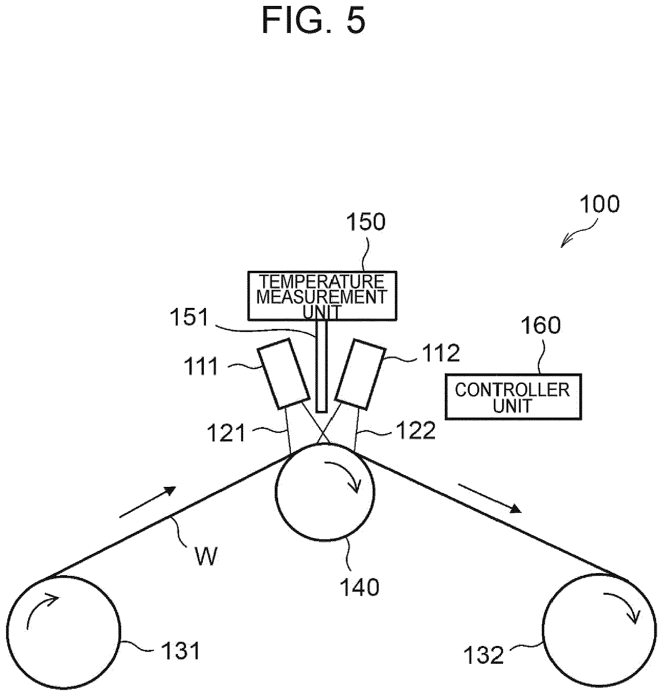

FIG. 5 is a schematic diagram illustrating an exemplary configuration of a drying apparatus 100 used in the slurry drying process 22c.

The drying apparatus 100 is equipped with a first linear light source unit 111 and a second linear light source unit 112. The first linear light source unit 111 and the second linear light source unit 112 are arranged at positions opposite the slurry side of the workpiece W being conveyed and irradiate the workpiece W with light from the slurry side, respectively. Here, the workpiece W is a workpiece having an elongated shape in which the slurry is applied to the negative electrode current collector 12a.

The drying apparatus 100 conveys the workpiece W having the elongated shape that is wound onto a reel, and during conveyance of the workpiece W, irradiates the slurry side of the workpiece W with light emitted from the first linear light source unit 111 and the second linear light source unit 112, respectively, and heats and dries the slurry by the light irradiation. The workpiece W is conveyed by being unrolled from the feed reel 131 and wound onto the take-up reel 132.

The drying apparatus 100 may be equipped with a chill roll 140, which is a cooling mechanism, between the feed reel 131 and the take-up reel 132, both of which constitute a conveyance mechanism. The first linear light source unit 111 and the second linear light source unit 112 are positioned above the chill roll 140, spaced apart each other in the conveyance direction of the workpiece W, and emit light downward or diagonally downward, respectively.

Each of the first linear light source unit 111 and the second linear light source unit 112 is equipped with an LED element that emits light having a peak wavelength between 320 nm and 450 nm.

In recent years, various LED elements that emit light having a peak wavelength between 365 nm and 405 nm have been developed as high-power and inexpensive LED elements. Therefore, the above LED elements may be used as the LED elements of the first linear light source unit 111 and the second linear light source unit 112, respectively.

Each of the first linear light source unit 111 and the second linear light source unit 112 may be provided with multiple LED elements. In this case, the multiple LED elements provided in the first linear light source unit 111 may be arranged to form a linear irradiation region 121 in the width direction of the elongated workpiece W, and the multiple LED elements provided in the second linear light source unit 112 may be arranged to form a linear irradiation region 122 in the width direction of the elongated workpiece W.

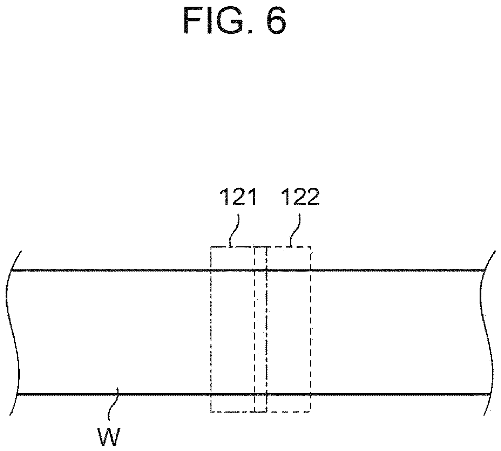

Here, the first linear light source unit 111 and the second linear light source unit 112 may be arranged such that their respective linear irradiation regions 121 and 122 partially overlap in the conveyance direction of the workpiece W (i.e., horizontal direction in FIG. 6), as shown in FIG. 6.

The chill roll 140, for example, has its surface temperature lowered by running cooling water through the roll. During irradiation of light onto the workpiece W by the first linear light source unit 111 and the second linear light source unit 112, the chill roll 140 cools the region on the workpiece W that is being irradiated with light from the side opposite to the side onto which the light is irradiated (i.e., the current collector side). In other words, the drying apparatus 100 irradiates the slurry side of the workpiece W with light while cooling the opposite side of the workpiece W from the slurry.

The drying apparatus 100 may also be equipped with a temperature measurement unit 150 configured to measure the temperature of the slurry in the irradiation regions 121 and 122. The temperature measurement unit 150 is equipped with a temperature measurement probe 151 of which tip is positioned in the vicinity of the slurry in the irradiation regions 121 and 122.

Furthermore, the drying apparatus 100 is equipped with a controller unit 160 configured to control at least one of the first linear light source unit 111, the second linear light source unit 112, the feed reel 131, the take-up reel 132, and the chill roll 140. The controller unit 160 acquires the temperature of the slurry measured by the temperature measurement unit 150 and controls at least one of the light intensities of the light emitted from the first linear light source unit 111 and the second linear light source unit 112, the conveying speed of the workpiece W, and the cooling intensity of the workpiece W such that the temperature of the slurry is kept within a predetermined temperature range. Here, the above predetermined temperature range is the temperature range that is required for drying and polymerizing the binder resin.

Polyimide binders and CMC + SBR binders require relatively high temperatures when drying and polymerizing. For example, the polyimide may be mixed into a slurry in the state of polyimide precursor and polymerized at high temperatures during drying, which in some cases requires the temperature exceeding 400°C.

Conventionally, the slurry has been dried in a drying furnace using heaters (e.g., halogen heaters or infrared heaters). In this conventional drying processing, not only the slurry but also the current collector is heated in the high-temperature furnace. Copper, which is mainly used as a material for the negative electrode current collector, is easily oxidized (in other words, oxidation progresses even at low temperatures). Therefore, at high temperatures above 200°C, such as 300°C or 400°C, oxidation of a surface layer of the copper foil progresses, and the increase in interfacial resistance (i.e., contact resistance) due to the formation of the copper oxide film is likely to adversely affect battery performance, resulting in deterioration of battery property.

Furthermore, the current collector made of metal foil has a large thermal expansion coefficient, thus the slurry is dried and solidified in a greatly elongated state during high-temperature heating. For this reason, when the metal foil shrinks during the cooling process after the slurry is dried, large residual stress may occur, causing problems such as exfoliation of the active material layer (i.e., dried slurry) from the current collector, and wrinkles and cracks in the active material layer.

To cope with the above mentioned problems, according to the present embodiment, by selectively heating the slurry using light irradiation, the slurry is dried while suppressing the temperature rise of the current collector. According to the present embodiment, light having a peak wavelength between 320 nm and 450 nm is irradiated onto the workpiece W from the slurry side of the workpiece W.

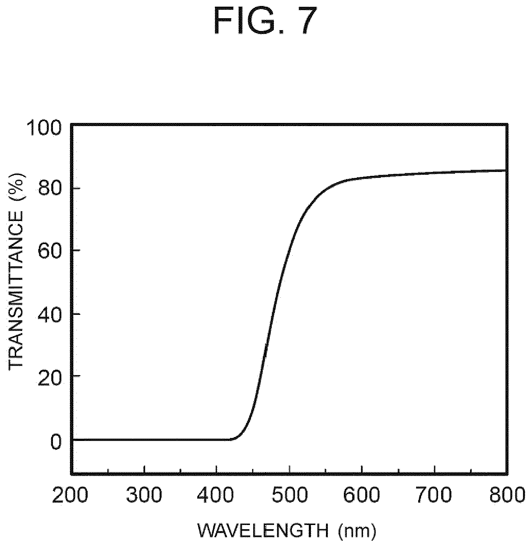

For example, as shown in FIG. 7, polyimides absorb more light below 550 nm, especially below 450 nm, and the shorter the wavelength, the higher the light absorption (i.e., lower the light transmittance). FIG. 7 shows the transmittance of Kapton (registered trademark), an aromatic polyimide, as a typical polyimide. By irradiating with light having the wavelength equal to or less than 450 nm from the slurry side containing the polyimide or the polyimide precursor, the irradiated light is absorbed by the slurry, and the light is converted to heat in the slurry and the slurry is heated. The slurry absorbs the light, making it difficult for the light to reach the current collector below the slurry. Therefore, the temperature rise of the current collector is dominated by the heat conduction from the slurry, making it possible to heat the slurry in a substantially selective manner.

Taking the above into consideration, it is preferable that the light irradiated onto the workpiece W is light in the wavelength range where the light absorption in the slurry is 60% or higher, depending on the material of the slurry. Thus, it makes it possible to promote selective heating of the slurry by irradiating with light having shorter wavelengths with relatively large absorption in the slurry.

However, in the other hand, UV-B and UV-C wavelengths equal to or less than 320 nm may induce photochemical reactions in polyimides (e.g., low molecular weight reactions and unwanted cross-linking and polymerization reactions that are side effects caused by the radicals produced by those reactions). For this reason, it is preferable to avoid irradiating with light having the wavelength of UV-B or shorter (wavelength equal to or less than 320 nm). For example, the first linear light source unit 111 and the second linear light source unit 112 of the drying apparatus 100 may be equipped with a wavelength selective filter that blocks transmission of light having the wavelength equal to or less than 320 nm, so that the light having the wavelength equal to or less than 320 nm is prevented from being irradiated onto the workpiece W.

In other words, the light to be irradiated onto the workpiece W is required to have a wavelength that does not induce a photochemical reaction of the binder resin, and it is also required to be light that is absorbed by the slurry.

When the slurry contains a polyimide binder, by irradiating with light having a peak wavelength between 320 nm and 450 nm, it makes it possible to allow the slurry to absorb the irradiated light and efficiently convert the light into heat, while suppressing the side effects of irradiation with light having the wavelength of UV-B or shorter. It should be noted that, as shown in FIG. 7, an aromatic polyimide begins to largely absorb light at a wavelength of around 550 nm. Therefore, when the slurry contains a binder containing the aromatic polyimide, the workpiece W may be irradiated with light having a peak at the wavelengths between 320 nm and 550 nm.

Also, in the case of the CMC + SBR binder, it is required to suppress irradiation with light having the wavelength of UV-B or shorter (i.e., the wavelength equal to or less than 320 nm), which causes decomposition and deterioration of SBR. It should be noted that, in the case of the CMC + SBR binder, since UV-induced deterioration of the SBR occurs particularly severely, it is preferable to cut the shorter wavelength side further than in the case of the polyimide. More specifically, it is preferable to cut off wavelengths shorter than 365 nm using a wavelength selective filter, or the like. The reason why UV-induced deterioration of the SBR occurs particularly severely is because SBR is opaque in the visible and UV wavelength ranges and absorbs light more largely than polyimide. This is presumably due to the fact that, while SBR efficiently absorbs light and converts light to heat, SBR also undergoes intense decomposition reactions due to the high photon energy of short-wavelength light.

Even when assuming that SBR is opaque, CMC is relatively transparent down to shorter wavelengths that reach the UV-B region. Therefore, with a commonly used binder with a mixing ratio of 1:1 to 1:2 of CMC:SBR, light propagates mainly through the CMC to the bottom of the coating film. For this reason, light reaches SBR over the depth of the coating film and is converted into heat to heat the entire coating film, so that it leads to no problems such as hardening of only the surface layer of the coating film.

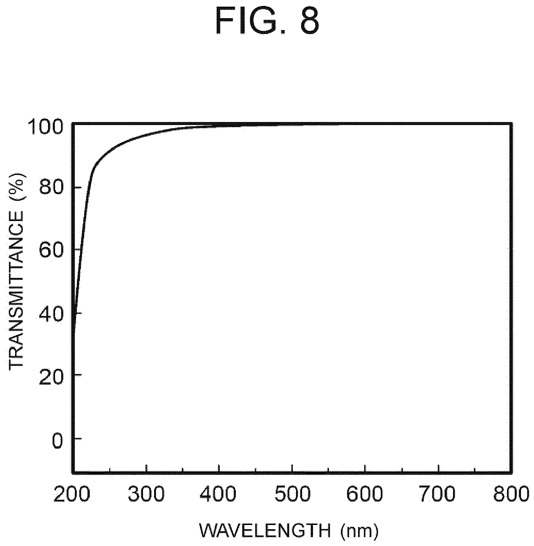

However, since CMC has poor thermal conductivity (i.e., approximately 0.1 W/m•K), which is only half that of SBR, it is more efficient for CMC itself to absorb light to some extent and convert the absorbed light into heat. For this reason, it is preferable to irradiate CMC with light at wavelengths equal to or less than 450 nm, where light absorption by CMC increases. FIG. 8 is a chart illustrating the transmittance of CMC.

In other words, in the case of the CMC + SBR binder, by irradiating with light with a peak wavelength between 320 nm and 450 nm, preferably between 365 nm and 450 nm, it makes it possible to allow the slurry to absorb light and efficiently convert the absorbed light into heat while suppressing the side effects of irradiation with light having the wavelength of UV-B or shorter. In the case of the CMC + SBR binder, it is also preferable to irradiate with light having the wavelength range where the light absorption in the slurry is equal to or greater than 60%.

Furthermore, by irradiating with light having a wavelength that has high light reflectance in the current collector material, it makes it possible to reflect light transmitted through the slurry back toward the slurry on the surface of the current collector. This keeps the temperature of the current collector low because the light absorption by the current collector itself is suppressed to be low.

For this reason, it is preferable to irradiate with light having the wavelength range where the light reflectance on the surface of the current collector is equal to or greater than 30%.

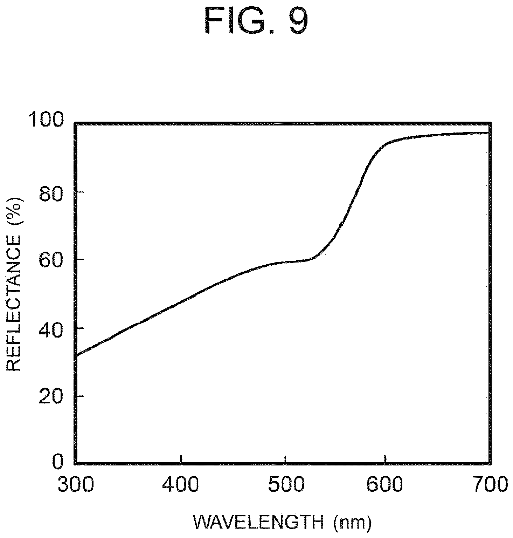

Copper is mainly used as the negative electrode current collector 12a. FIG. 9 is a chart illustrating the reflectance of copper. As shown in FIG. 9, the reflectance of copper is equal to or greater than 30% at wavelengths of 320 nm and above. Therefore, by irradiating with light with a peak at a wavelength between 320 nm and 450 nm as described above, it makes it possible to appropriately suppress the temperature rise of the negative electrode current collector 12a, even when copper, which is prone to oxidation (i.e., oxidation proceeds even at low temperatures), is used as the negative electrode current collector 12a.

It should be noted that, when copper, which is prone to oxidation, is used as the negative electrode current collector 12a, the workpiece W may not be irradiated with light having the shorter wavelength in order to obtain higher light reflectance. For example, at a wavelength of 380 nm or longer, the reflectance of copper is equal to or greater than 40%. Therefore, when copper is used as the negative electrode current collector 12a, the workpiece W may be irradiated with light having the wavelength equal to or greater than 380 nm. It makes it possible to suppress the temperature rise of the negative electrode current collector 12a more efficiently, thereby obtaining the effects of suppressing the increase in the interfacial resistance significantly.

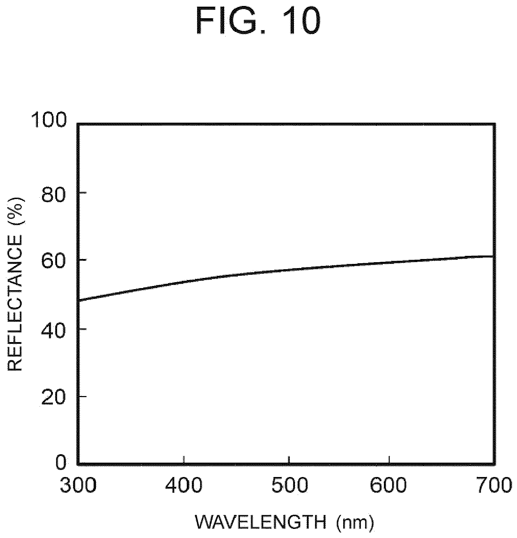

Stainless steel may also be used as the negative electrode current collector 12a. Stainless steel has a low thermal conductivity, thus the high temperature from the slurry is hardly to be transferred to stainless steel. Therefore, it makes it possible to suppress the temperature rise due to heat conducted from the slurry, thereby obtaining the effects of substantially selective heating of the slurry significantly. In addition, as shown in FIG. 10, the wavelength dependence of the reflectance of stainless steel is almost negligible, about 55%. Therefore, when irradiating with light having the peak wavelength between 320 nm and 450 nm as described above, it makes it possible to appropriately reflect the light transmitted through the slurry on the surface of the current collector, thereby suppressing the temperature rise of the negative electrode current collector 12a appropriately.

As described above, according to the present embodiment, the slurry is heated and dried by light irradiation. Here, it is preferable to irradiate the workpiece W with light having the wavelength in which light absorption in the slurry is equal to or greater than 60%, depending on the material of the slurry. For example, the light irradiated onto the workpiece W may be light having the peak wavelength between 320 nm and 450 nm. It makes it possible to heat and dry the slurry while suppressing the temperature rise of the current collector. Inter alia, by irradiating the workpiece W with light having a short wavelength, which has a high absorption in the slurry, it makes it possible to promote substantially selective heating of the slurry.

Furthermore, when light with high light reflectance of the current collector material is used as the light to be irradiated onto the workpiece W, it makes it possible to reflect the light transmitted through the slurry toward the slurry side. Therefore, it makes it possible to keep the light absorption of the current collector itself low, thereby keeping the temperature of the current collector low.

As described above, as the temperature rise of the current collector may be suppressed in the processes of heating and drying the slurry, it makes it possible to suppress oxidation of the surface of the current collector and prevent the increase of interfacial resistance (i.e., contact resistance) due to oxide film formation. As a result, it makes it possible to suppress properties of rechargeable batteries from deteriorating.

In addition, since a temperature gradient may be provided between the current collector and the slurry, it makes it possible to suppress defects such as exfoliating, wrinkling, and cracking that may occur due to the difference in thermal expansion coefficients between the current collector and the slurry.

It should be noted that, although the above embodiments exemplarily describe a particular case in which the drying apparatus 100 conveys an elongated workpiece W in a roll-to-roll system, alternatively, a method of conveying the workpiece W is not limited to the above. For example, the workpiece W is not limited to an elongated workpiece, and alternatively the workpiece W may be conveyed in a single wafer processing system.

Although the drying apparatus 100 according to the above described embodiments has the first linear light source unit 111 and the second linear light source unit 112 fixed, it is sufficient as long as the light source units and the workpiece W may be moved relative to each other, which means at least one of the light source units and the workpiece W may be moved relative to each other. The above movement may be a scanning movement or a sequential movement.

Furthermore, although the drying apparatus 100 according to the above described embodiments is equipped with two linear light source units, alternatively, the drying apparatus 100 may be equipped with one light source unit or three or more. Yet furthermore, each of the light irradiation regions is not limited to a linear shape, but may, for example, form an irradiation region having a plane shape.

Yet furthermore, the drying apparatus 100 according to the above described embodiments may also be equipped with a second temperature measuring unit that measures the temperature of the current collector. In this case, the controller unit 160 may acquire the temperature of the current collector measured by the second temperature measuring unit and control the cooling intensity of the workpiece W such that the temperature of the current collector is kept within a predetermined temperature range. Here, the above predetermined temperature range is a temperature range where high temperature oxidation of the current collector does not occur, for example, in the case of copper, the temperature range is less than 200°C.

Although specific embodiments have been described above, the embodiments described are illustrative only and are not intended to limit the scope of the present invention. The apparatus and method described herein may be embodied in other forms than as described above. In addition, it is also possible to appropriately omit, substitute, or modify the above described embodiments without departing from the scope of the present invention. Embodiments with such omissions, substitutions and modifications fall within the scope of the appended claims and equivalents thereof and also fall within the technical scope of the present invention.

### REFERENCE SIGNS LIST

10: Rechargeable Battery (Lithium-Ion Battery); 11: Positive Electrode; 11a: Positive Electrode Current Collector; 11b: Positive Electrode Active Material; 12: Negative Electrode; 12a: Negative Electrode Current Collector; 12b: Negative Electrode Active Material; 13: Separator; 14: Electrolytic Solution; 100: Drying Apparatus; 111: First Linear Light Source Unit; 112: Second Linear Light Source Unit; 121: First Irradiation Region; 122: Second Irradiation Region; 131: Feed Reel (Conveyance Mechanism); 132: Take-up Reel (Conveyance Mechanism), 140: Chill Roll (Cooling Mechanism); 150...Temperature Measurement Unit; 151: Temperature Measurement Probe; 160...Controller Unit

## Claims

1. A method of manufacturing an electrode for a rechargeable battery, comprising:
a preparation process for preparing a workpiece on which a slurry containing a negative electrode active material is applied to at least one surface of a negative electrode current collector; and
a drying process for heating and drying the slurry by irradiating a side of the slurry of the workpiece with light having a wavelength range in which light absorption in the slurry is equal to or greater than 60%.

2. The method of manufacturing an electrode according to Claim 1, wherein
the drying process irradiates the side of the slurry of the workpiece with light having a wavelength range in which the light absorption in the slurry is equal to or greater than 60% and light reflectance on a surface of the negative electrode current collector is equal to or greater than 30%.

3. The method of manufacturing an electrode according to Claim 1 or 2, wherein
the slurry is made of a thermally cross-linked material.

4. The method of manufacturing an electrode according to any one of Claims 1 to 3, wherein
the slurry contains polyimide or polyimide precursor, and
the drying process irradiates the side of the slurry of the workpiece with light having a peak wavelength between 320 nm and 450 nm.

5. The method of manufacturing an electrode according to any one of Claims 1 to 3, wherein
the slurry contains carboxymethyl cellulose and styrene-butadiene rubber, and
the drying process irradiates the side of the slurry of the workpiece with light having a peak wavelength between 320 nm and 450 nm.

6. The method of manufacturing an electrode according to any one of Claims 1 to 5, wherein
the drying process irradiates the side of the slurry of the workpiece with light having a peak wavelength between 365 nm and 405 nm.

7. The method of manufacturing an electrode according to any one of Claims 1 to 6, wherein
the negative electrode current collector is made of copper; and
the drying process irradiates the side of the slurry of the workpiece with light having a wavelength equal to or greater than 380 nm.

8. The method of manufacturing an electrode according to any one of Claims 1 to 7, wherein
the negative electrode current collector is made of stainless steel.

9. The method of manufacturing an electrode according to any one of Claims 1 to 8, wherein
the drying process irradiates the side of the slurry of the workpiece with the light while cooling an opposite side of the workpiece from the slurry.

10. A drying apparatus for drying a workpiece on which a slurry containing an electrode active material is applied to at least one surface of an electrode current collector, comprising:
a light source unit;
a conveyance mechanism configured to convey the workpiece; and
a controller unit,
the light source unit including an LED element configured to emit light having a peak wavelength between 320 nm and 450 nm, and being arranged at a position to irradiate a side of the slurry of the workpiece with the light, and
the controller unit controlling at least one of the light source unit and the conveyance mechanism to scan or sequentially move the workpiece and the light source unit relative to each other, and controlling the light source unit to irradiate the side of the slurry of the workpiece with the light to heat and dry the slurry.

11. The drying apparatus according to Claim 10, further comprising:
a cooling mechanism configured to cool the workpiece, and
the cooling mechanism being arranged at a position to cool the workpiece from a side opposite to a surface of the workpiece onto which the light is irradiated.

12. The drying apparatus according to Claim 11, wherein
the cooling mechanism cools a region on the workpiece that is irradiated with the light from the side opposite to the surface of the workpiece onto which the light is irradiated during the light source unit irradiating the workpiece with the light.

13. The drying apparatus according to Claim 11 or 12, wherein
the controller unit controls at least one of the light source unit, the cooling mechanism, and the conveyance mechanism to control temperature of the slurry within a predetermined temperature range.

14. The drying apparatus according to any one of Claims 10 to 13, wherein
the workpiece has an elongated shape, and
the conveyance mechanism conveys the elongated workpiece wound in the form of a reel.

15. The drying apparatus according to Claim 14, wherein
the drying apparatus is equipped with a plurality of light source units,
each of the LED elements is arranged to form a linear irradiation region in a width direction of the elongated workpiece,
the plurality of light source units are arranged such that respective linear irradiation regions of the plurality of light source units partially overlap in a conveyance direction of the workpiece, and
the controller unit controls temperature of the slurry in the irradiation regions within a predetermined temperature range.
